# EUROPÄISCHE PATENTSCHRIFT

(11) **EP 1 910 685 B1**
(45) Veröffentlichungstag und Bekanntmachung des Hinweises auf die Patenterteilung: **15.04.2009**
(21) Anmeldenummer: 06762476.7
(22) Anmeldetag: 07.07.2006
(51) Int. Cl.: F04D 29/04, F16F 15/30

(54) **ELEKTROMOTOR MIT KOAXIAL ZUGEORDNETER PUMPE**
ELECTRIC MOTOR HAVING A COAXIALLY ARRANGED PUMP
MOTEUR ELECTRIQUE DOTE D'UNE POMPE DE MONTAGE COAXIAL

(30) Priorität: 29.07.2005 DE 102005036347
(43) Veröffentlichungstag der Anmeldung: 16.04.2008
(73) Patentinhaber: KSB Aktiengesellschaft, 67227 Frankenthal (DE)
(72) Erfinder: BRECHT, Bernhard, 67433 Neustadt/Weinstrasse (DE); GRABER, Ralf, 60528 Frankfurt (DE); BRUHNS, Uwe, 67269 Grünstadt (DE); HARTMANN, Harald, 67271 Kindenheim (DE)
(86) Internationale Anmeldenummer: PCT/EP2006/006644
(87) Internationale Veröffentlichungsnummer: WO 2007/014620

(56) Entgegenhaltungen:
- EP-A2- 0 351 488
- DE-A1- 3 912 389
- US-A- 3 960 034
- US-A- 4 084 924

## Beschreibung

Die Erfindung betrifft einen Elektromotor mit koaxial zugeordneter Pumpe für einen Kühlmittelkreislauf, insbesondere in einer Anlage mit Temperaturüberführung und/oder Wärmeübertragung, innerhalb von als hermetisch dichte Druckhülle ausgebildeten Gehäuseteilen ein Wellenstrang ein Drehmoment vom Elektromotor auf mindestens ein im Pumpengehäuse angeordnetes Laufrad überträgt und zwischen Elektromotor und Pumpengehäuse ein Schwungrad angeordnet ist, alle rotierenden Teile innerhalb eines hermetisch dichten Motor-Pumpen-Aggregats angeordnet sind und das Motor-Pumpen-Aggregat mit Flüssigkeit gefüllt ist.

Es ist bekannt, in mit Wärmeerzeugern ausgerüsteten und Temperaturüberführung- und/oder Wärmeübertragungseinrichtungen aufweisenden Kraftwerksanlagen Motor-Pumpen-Aggregate einzusetzen, die mit einem Schwungrad ausgerüstet sind. Dies ist eine Sicherheitsmaßnahme, um in einem eventuellen Störfall aufgrund des Trägheitsvermögens eines Schwungrades die Aufrechterhaltung einer Kühlmittelzirkulation durch die Pumpe für eine Mindestzeitdauer gewährleisten zu können. Durch das Trägheitsmoment eines Schwungrades läuft ein solcher Elektromotor auch bei einem Stromausfall noch weiter und das Motor-Pumpen-Aggregat fördert dabei eine Kühlmittelmenge. Eine solche zwar verringerte Kühlmittelmenge reicht aber aus, um in einer Wärmeübertragungseinrichtung so lange eine Wärmeabfuhr zu gewährleisten, bis der Wärmeerzeuger sicher abgeschaltet ist.

Durch die US-A 3 960 034 ist ein sogenannter trockener Elektromotor bekannt, wobei der Motor und das Schwungrad mit Luft gekühlt werden. Zusätzlich ist dabei das Schwungrad mit einer Schutzeinrichtung ausgerüstet, um bei Überdrehzahlen mögliche Gefährdungen der Umgebung durch ein berstendes Schwungrad auszuschließen.

Bei Wellenabdichtungslosen Motor-Pumpen-Aggregaten jedoch, bekannt durch die DE-C 2 807 876 oder die US-A 4 084 876, ergibt sich durch den mit einem Kühlmittel gefüllten Motor und durch ein im Kühlmittel umlaufendes Schwungrad ein hydrodynamischer Reibungswiderstand. Die Drehung des Schwungrades im Kühlmittel, häufig Wasser, bedingt durch die hydrodynamische Reibung und die Erzeugung von Wärmeenergie eine hohe Verlustleistung. Dies vermindert den Gesamtwirkungsgrad von Pumpe, Motor und Schwungrad. Dieses Motor-Pumpen-Aggregat weist zwischen dem Pumpenteil und dem Motorteil eine Wärmesperre mit einem dünnen Gehäusehals auf, um die Wärmeleitung zwischen dem heißen Pumpengehäuse und dem gekühlten Motor-gehäuse so gering wie möglich zu halten. Hinter der Wärmesperre befindet sich an der Stirnseite des Motorgehäuses und innerhalb eines druckfest ausgebildeten, gemeinsamen Gehäuses ein vom Wellenstrang angetriebenes Schwungrad. Und zur Reduzierung der hydrodynamischen Reibungsverluste ist das Schwungrad von einem drehbar im Gehäuses gelagerten Mantel umgeben, der Eintrittsöffnungen für die im Motorgehäuse befindliche Flüssigkeit aufweist. Im Betrieb nimmt der Mantel aufgrund der hydrodynamischen Reibungsflächen zwischen Gehäuse, Mantel und Schwungrad eine mittlere Drehzahl ein, die geringer ist als die Drehzahl des Schwungrades. Dadurch soll sich eine Reduzierung der Reibungsverluste an dem im kühleren Motorteil angeordnetem Schwungrad ergeben.

Ein Elektromotor in Form eines Spaltrohrmotors für ein Motor-Pumpen-Aggregat mit einem Schwungrad ist durch die EP 0 351 488 B1 oder die US-A 4 886 430 bekannt. Innerhalb der eine Druckhülle bildenden Gehäuseteile ist im Bereich eines druckseitigen Pumpengehäusedeckels von dem gekapselten und flüssigkeitsgefüllten Motor-Pumpen-Aggregat das Schwungrad als ein Lagerelement ausgebildet. Es übernimmt für den Wellenstrang im Bereich des Pumpengehäuses die Radiallagerfunktion. Und da das Schwungrad auch als ein Axiallager ausgebildet ist, wurde damit, im Gegensatz zur Lösung nach der DE-C 2 807 876, auf eine Axiallageranordnung am pumpenfernen Motorende verzichtet.

Zwischen dem Pumpengehäuse und dem Lagerkräfte aufnehmendem Schwungrad ist im Gehäuse ein topfförmiger Einsatz als integrierte Wärmesperre angeordnet. Er ist auf der Außenseite und gegenüber dem Pumpenteil mit isolierenden Luftkammern versehen. Auf seiner der Schwungradstirnseite zugekehrten Innenseite ist eine zusätzliche externe Flüssigkeitskühlung angeordnet. Zwischen der Flüssigkeitskühlung und der pumpennahen Stirnseite des Schwungrades ist noch ein Lagerkräfte aufnehmendes Wandelement angeordnet. Durch die Ausbildung als Spaltrohrmotorpumpenaggregat sind der Schwungradraum und der Rotorraum des Elektromotors mit dem zu pumpenden Förderfluid gefüllt und diese Räume stehen unter dem gleichen Druck wie das Pumpengehäuse, während der Statorraum des Motors trocken ausgebildet ist. Den Motor umgibt ein Wärmetauscher, durch den dasjenige Wasser fließt, welches am Schwungrad anliegende Lagerelemente schmiert und kühlt. Dieser Kühlkreislauf vom Motor, Radial- und Axiallager sowie des Schwungrades strömt auch durch das Schwungrad selbst hindurch. Dies schwächt somit die Nabe-Wellen-Verbindung des Schwungrades.

Der Erfindung liegt das Problem zugrunde, für mit einem Schwungrad ausgerüstete Motor-Pumpen-Aggregate eine verbesserte Lösung zu erreichen, bei der sowohl der Aufbau eines Schwungrades, dessen Betriebssicherheit als auch dessen Verlustleistung infolge der hydrodynamischen Reibung verbessert ist.

Die Lösung dieses Problems sieht vor, dass das Schwungrad aus einem Schwungradkörper mit einer Vielzahl von Hohlräumen und mit in den Hohlräumen angeordneten Schwermetalleinsätzen besteht, dass ein Schwermetall mit einer Dichte größer 11,0 (kg/dm³) die Schwermetalleinsätze bildet oder darin angeordnet ist und dass der Schwungradkörper aus einem hochfesten Material besteht.

Diese Lösung bietet den Vorteil der leichteren und besseren Anpassbarkeit an unterschiedliche Betriebssituationen. Durch einfache Wahl und Anordnung der Hohlräume können darin verschiedene Schwermetalleinsätze eingesetzt werden. Für diejenigen Anwendungsfälle, bei denen die im Motor-Pumpen-Aggregat befindliche Förderflüssigkeit ungünstige Reaktionen mit den Schwermetalleinsätzen eingehen kann, sind Mittel zur Abschirmung der Schwermetalleinsätze gegenüber einer umgebenden Flüssigkeit vorgesehen. Diese Mittel können am Schwungradkörper angeordnet sein. Und/oder die Einsätze sind mit Mitteln zur Abtrennung der Schwermetalleinsätze gegenüber einer umgebenden Flüssigkeit versehen.

Als besonders vorteilhaft hat sich herausgestellt, wenn die Schwermetalleinsätze kartuschenartig ausgebildet und mit an sich bekannten Mitteln im Schwungradkörper befestigt sind. Insofern können die Einsätze an einem anderen Ort sicher hergestellt werden, sind somit leicht zu transportieren und auch lagerfähig. Später, wenn ein Schwungradkörper fertig bearbeitet ist, sind sie in einfachster Weise in diesen einzusetzen. Die Halterung der Schwermetalleinsätze im Schwungradkörper kann mit an sich bekannten technischen Mitteln erfolgen. Dies wären Schweißverbindungen, Schraubverbindungen, Löten, Kleben, Schrumpf- oder Pressverbindungen und dergleichen. Die Verbindungsart wird in Abhängigkeit von den jeweiligen Betriebsbedingungen ausgewählt.

Ebenso ist es möglich, die Schwermetalleinsätze als in die Hohlräume eingefüllte Schüttungen auszubilden und darin mit an sich bekannten Mitteln zu halten. Dies wäre eine Lösung für diejenigen Fälle, bei denen das Schwermetall als schüttfähiges, körniges Granulat oder ähnliches vorrätig ist und entsprechend zu handhaben ist.

Nach einer anderen Ausgestaltung der Erfindung hat es sich als vorteilhaft erwiesen, wenn der Schwungradkörper keine Bohrung für die Durchführung des Wellenstranges aufweist. Bei Elektromotoren mit sehr hohen Antriebsleistungen, wie sie in Großkraftwerken verwendet werden, wirken auf ein solches Schwungrad sehr große Kräfte ein. Dabei besteht die Gefahr, dass, ausgehend von einer Durchgangsbohrung für einen Wellenstrang, im Bereich des Überganges zwischen Schwungradkörper und Wellenstrang ungünstige Nabenspannungen entstehen. Im Extremfall, beispielsweise bei einem Überlastbetrieb, können diese zu einem Bruch des Schwungradkörpers führen. Vorteilhafter ist dagegen eine Verbindung des Schwungradkörpers über ein- oder mehrteilige Flanschverbindungen mit dem Wellenstrang. Dies vermindert die Bruchgefahr des Schwungradkörpers erheblich. Vorteilhaft sind auch der Drehmomentübertragung dienende Stirnverzahnungen , welche die Verbindungsmittel zwischen Schwungradkörper und Wellenstrang bilden.

Da der Elektromotor und das davon angetriebene, hermetisch dichte Motor-Pumpen-Aggregat mit Förderflüssigkeit gefüllt ist, besteht hier das zusätzliche Problem, wonach ein in der Flüssigkeit umlaufendes Schwungrad durch die Flüssigkeitsreibung auch eine hohe Verlustleistung erzeugt. Aus wirtschaftlichen oder sicherheitstechnischen Gründen kann es jedoch sinnvoll sein, eine solche Verlustleistung im Bereich des Schwungrades bewusst zu zulassen, um dadurch die hermetische Dichtheit zu erreichen auf den Einsatz von störanfälligen Wellendichtungen verzichten zu können.

Hierfür ist vorgesehen, innerhalb der Druckhülle mindestens ein den Außendurchmesser des Schwungrades umgebender Wärmetauscher angeordnet ist und eine radiale Wandfläche eines Schwungradraumes bildet, dass eine Hochdruckzone des Pumpenraumes durch einen oder mehrere, über die Außenseite vom Wärmetauscher geführte Strömungspfade mit einer pumpenfernen Seite des Schwungradraumes verbunden sind, dass ein Ringspalt zwischen Wärmetauscher und Schwungrad einen ersten Rückstrompfad zwischen dem pumpenfernen und dem pumpennahen Schwungradraum bildet und dass ein im Bereich des Wellenstrangs angeordneter zweiter Rückströmpfad den pumpennahen Schwungradraum mit dem Pumpenraum verbindet.

Mit dieser Lösung wird eine definiert hohe und trotzdem betriebssichere Temperatur im Schwungradraum gewährleistet. Hier liegt die Erkenntnis zugrunde, dass bei höheren Flüssigkeitstemperaturen innerhalb des Schwungradraumes die hier entstehenden Leistungsverluste stark reduziert werden, da sich in Folge des Temperatureinflusses die Dichte der Flüssigkeit und deren Viskosität reduziert und somit die Reibungsverluste minimiert werden. Durch die Anordnung des Wärmetauschers auf größerem Durchmesser um das Schwungrad herum, ergibt sich eine besonders effiziente Kühlwirkung. Es tritt eine verbesserte Kühlwirkung ein, wenn ein dem Pumpenraum entnommenes Förderfluid über den größten Durchmesser des Wärmetauschers hinwegströmt und auf der pumpenfernen Seite in den Schwungradraum eintritt.

Aufgrund des Druckgefälles im Pumpengehäuse zwischen einem niedrigen Druck am Laufradeintritt und einem hohen Druck hinter dem Laufrad, hinter einer Leiteinrichtung oder in einem Spiralraum, wird das Förderfluid über die Strömungs- und Rückströmpfade zurück in den Pumpenraum strömen. Da das Schwungrad nicht mit Bohrungen versehen ist, wird das gekühlte Förderfluid durch den Spalt zwischen dem Außendurchmesser des Schwungrades und dem Innendurchmesser des zylinderförmigen Wärmetauschers in Gegenrichtung zurück strömen. Hierbei wird es zusätzlich und ein zweites Mal der Kühlwirkung des Wärmetauschers ausgesetzt und nimmt gleichzeitig die Verlustwärme de Schwungrades auf. Das Förderfluid verlässt den Schwungradraum auf kleinerem Durchmesser im Bereich des Wellenstranges und an dessen anderer, der pumpennahen Seite. Durch im Laufrad angeordnete Entlastungsbohrungen strömt es zurück in den Hauptstrom der Pumpe. Für den Antrieb dieses internen Flüssigkeitsstromes kann die Druckdifferenz zwischen der Entnahmeöffnung und der Eintrittsöffnung im Pumpengehäuse ausreichen.

Die Kühlwirkung lässt sich dadurch verbessern, dass mehrere Wärmetauscher das Schwungrad auf größeren Durchmessern koaxial umgeben und zwischen diesen Wärmetauschern ein Ringspalt oder mehrere Kanäle den Strömungspfad zum pumpenfernen Schwungradraum bilden. Der oder die Wärmetauscher sind mit einer externen Kühlwasserquelle verbunden und können beispielsweise zylinderförmig ausgestaltet sein.

Und eine weitere Ausgestaltung der Erfindung sieht vor, dass im zweiten Rückströmpfad mindestens eine vom Wellenstrang angetriebene Fördereinrichtung angeordnet ist. Dadurch ist eine Steigerung des Durchsatzes von dem kühlenden Flüssigkeitsstrom möglich. Dies können bekannte Mittel in Form eines kleinen zusätzlichen Laufrades, welches mit Bohrungen oder Schaufeln versehen ist, ein Fördergewinde oder andere bekannte Einrichtungen sein.

Nach anderen Ausgestaltungen bildet ein pumpenseitiger Motordeckel die pumpenferne Wand des Schwungradraumes und ist im Motordeckel eine Kühleinrichtung angeordnet. Diese Kühleinrichtung kann als eine Niederdruck-Kühleinrichtung oder als eine Hochdruck-Kühleinrichtung ausgebildet sein. Ebenso ist es möglich diese Kühleinrichtung als Teil einer Hochdruck-Motorkühlung auszubilden. Um Vermischungen zu reduzieren ist zwischen Motorraum und Schwungrad im Bereich des Wellenstranges eine Wellendichtung angeordnet. Diese kann als Drosselstrecke, Labyrinthdichtung oder ähnlich gestaltet sein.

Ein Ausführungsbeispiel der Erfindung ist in den Zeichnungen dargestellt und wird im Folgenden näher beschrieben. Es zeigen die
- Fig. 1: einen Querschnitt durch ein Motor-Pumpen-Aggregat, die

- Fig. 2: eine perspektivische Ansicht auf einen Schwungradkörper und Schwermetalleinsätze, die
- Fig. 3 & 4: vergrößerte Ansichten vom Schwungradraum und die
- Fig. 5: ein Diagramm einer Temperaturverteilung am Schwungrad.

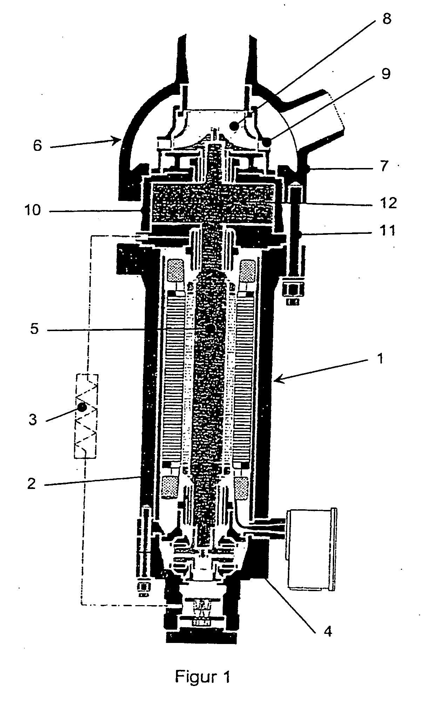

Fig. 1 zeigt einen flüssigkeitsgekühlten Motor 1 mit einem Gehäuse 2, welches als Druckhülle ausgebildet ist. Das Innere des Motors 1 ist flüssigkeitsgefüllt und zur Abfuhr der elektrischen Verlustleistung ist ein Hochdruckkühlsystem 3 mit den Motorenden verbunden. An dem einen Motorende 4 sind ein Radial- und ein Axiallager angeordnet, wobei das Axiallager gleichzeitig als Fördereinrichtung für das innerhalb des Motors und durch den Kühler 3 zirkulierende Kühlwasser dient. Die Antriebskraft des Motors wirkt auf einen Wellenstrang 5 und überträgt damit ein Drehmoment auf eine zum Elektromotor 1 koaxial zugeordnete Pumpe 6. Innerhalb eines Pumpengehäuses 7 ist ein Laufrad 8 mit nachgeordneter Leiteinrichtung 9 angeordnet und das Pumpengehäuse 7 ist durch ein Deckelelement 10 verschlossen und über Zuganker 11 mit dem Gehäuse 2 des Motors 1. verbunden. Innerhalb des hier mehrteilig ausgebildeten Deckelelementes 10 befindet sich ein Schwungrad 12, dessen Trägheitsmoment bei einem Stromausfall für eine weitere Rotationsbewegung des Wellenstranges 5 mit dem angeschlossenen Laufrad 8 und damit für eine Förderleistung der Pumpe 6 sorgt.

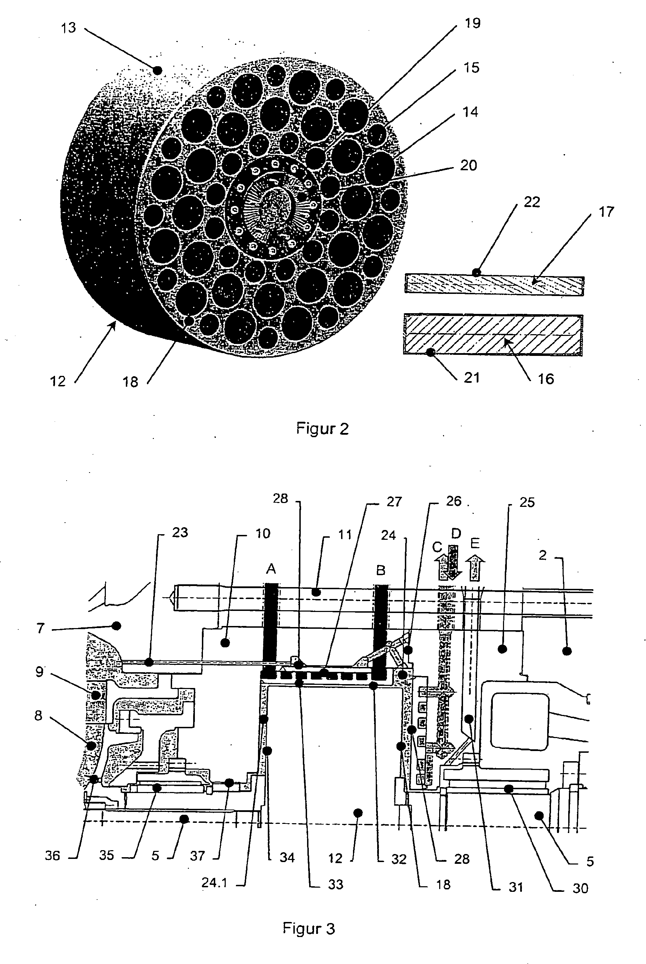

Diejenigen Gehäuseteile 2, 4, 7, 10 von Pumpe und Motor, die einen Innenraum gegenüber einer umgebenden Atmosphäre begrenzen, bilden eine sogenannte Druckhülle. Diese ist für einen sehr hohen Systemdruck ausgelegt, welcher in einer Anlage für eine Wärmeübertragung vorherrscht, in dem dieses Motor-Pumpen-Aggregat zur Umwälzung eines Förderfluids eingebaut ist. Da ein solches Aggregat für Antriebsleistungen größer 600 Kilowatt ausgelegt ist und damit eine überproportionale Baugröße aufweist, ist die Darstellung der Fig. 1 nur schematischer Art. Details sind in den nachfolgenden Figuren 2 und 3 in vergrößerter Darstellung gezeigt.

Die Fig.2 zeigt in perspektivischer Darstellung eine Ansicht auf ein Schwungrad 12. Es besteht aus einem Schwungradkörper 13, der in der Figur 2 hellgrau gezeichnet ist. Und der Schwungradkörper 13 verfügt über eine Vielzahl von dunkelgrau dargestellten Hohlräumen 14, 15. Diese Hohlräume 14, 15 dienen zur Aufnahme von Schwermetalleinsätzen 16, 17, mit denen das Trägheitsmoment eines fertig montierten Schwungrades 12 vergrößert wird. Die Hohlräume 14,15 weisen unterschiedliche Durchmesser auf, wodurch gewährleistet ist, dass der aus einem hochfesten Material bestehende Schwungradkörper 13 gegenüber den während eines Betriebes herrschenden Fliehkräften beständig ist. Durch die Anordnung, Größe und Anzahl der Hohlräume 14, 15 wird im Schwungradkörper 13 unter hohen Temperatureinflüssen ein sicherer Spannungsverlauf gewährleistet. Damit ist auch bei kritischen Betriebszuständen, beispielsweise bei einem durch eine Betriebsstörung bedingten Turbinenbetrieb oder Überlastbetrieb der Pumpe, wodurch sich eine höhere Drehzahl als die Nenndrehzahl ergibt, eine ausreichende Festigkeitsreserve sichergestellt.

An der Stirnseite 18 des zylinderförmigen Schwungradkörpers 13 ist eine Flanschverbindung 19 befestigt, mit der die Verbindung zum Wellenstrang 5 hergestellt wird. Die hier gezeigte Stirnverzahnung 20 wirkt mit einer entsprechenden Ausbildung des Wellenstranges 5 zusammen, so dass damit eine sichere Drehmomentübertragung gewährleistet ist. Es können auch andere kraftschlüssige und/oder formschlüssige Verbindungsformen Anwendung finden. Hierbei sollte jedoch sichergestellt sein, dass diese Verbindungsarten den Spannungsverlauf innerhalb des Schwungradkörpers 13 nicht negativ beeinflussen.

Aus der Fig. 2 ist weiterhin erkennbar, dass in den unterschiedlich großen Hohlräumen 14, 15 entsprechend dimensionierte Schwermetalleinsätze 16, 17 angeordnet werden. Dabei kann das Schwermetall als stab- oder schüttförmige Einsätze angeordnet sein. Die hier dargestellten Schwermetalleinsätze 16,17 zeigen eine Variante, bei der das Schwermetall innerhalb einer Kartusche 21, 22 befindlich ist. Eine solche ist einfach herzustellen, leicht zu handhaben, zu lagern und zu transportieren und bietet damit die Voraussetzung für eine problemlose Bevorratung solcher Schwermetalleinsätze 16, 17. Zusätzlich schützt eine solche Kartusche 21, 22 ein darin angeordnetes Schwermetall vor dem Einfluss des Fluides oder umgekehrt, welches ein Schwungrad 12 kühlend umgibt.

Der Verschluss einer solchen Kartusche, die hier zylinderförmig ausgebildet ist, erfolgt mittels bekannter Techniken und ist auf üblichen Werkzeugmaschinen möglich. Spezialmaschinen sind dafür nicht erforderlich. Eine solche Kartusche 21, 22 kann mit den bekannten Techniken innerhalb des Schwungradkörpers 13 gehalten werden. Ebenso gut ist es möglich, die Hohlräume 14,15 in dem Schwungradkörper 13 als Durchgangs- oder Sacköffnungen auszubilden und darin ein Schwermetall direkt anzuordnen. Zur Lagesicherung eines direkt in den Hohlräumen14, 15 befindlichen Schwermetalls können die Hohlräume durch einzelne Deckelelemente oder durch ein dem Schwungraddurchmesser entsprechende große Deckelelemente verschlossen werden.

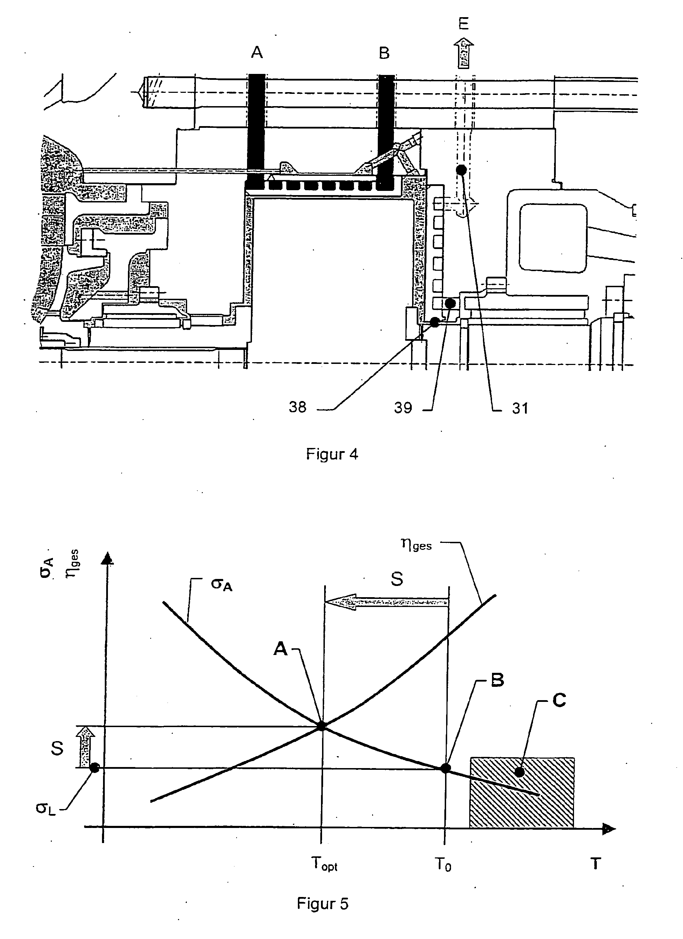

Die Fig. 3 und 4 zeigen in vergrößerter Darstellung die Anordnung des Schwungrades im Wellenstrang und seine Lage zwischen Pumpe und Motor. Innerhalb des Pumpengehäuses 6 ist das Laufrad 8 mit einer nachgeordneten Leiteinrichtung 9 erkennbar. Je nach Pumpentyp kann eine ein- oder mehrstufige Ausführung vorliegen. Bei der hier gezeigten einzigen oder letzten Pumpenstufe ist an einer Zone mit dem höchsten Druck innerhalb des Pumpengehäuses 7 - hier hinter der Leiteinrichtung 9 - eine Entnahmeleitung erkennbar. Diese dient als Strömungspfad 23 für ein Förderfluid und leitet dieses innerhalb der Druckhülle in den Schwungradraum 24. Den Schwungradraum 24 bilden ein Pumpendeckel 10 und ein pumpennaher Motordeckel 25. Die druck- und flüssigkeitsdichte Anlagefläche 26 der beiden Deckelteile 10, 25 liegt im Bereich einer pumpenfernen Stirnseite 18 des Schwungrades 12. Das so gebildete zweiteilige Schwungradgehäuse erleichtert die Herstellung und Montage. Den Zusammenhalt aller Teile bewirken Zuganker 11, die in das Pumpengehäuse 7 eingeschraubt sind und ihr Widerlager an einem Flansch des Motorgehäuses 2 finden.

Innerhalb des Schwungradraumes 24 ist ein das Schwungrad 12 umgebender Wärmetauscher 27 angeordnet, der mit einem die Druckhülle durchdringenden Niederdruckkühlsystem A-B verbunden ist. Der den Pumpeninnenraum mit dem Schwungradraum 24 verbindende Strömungspfad 23 leitet ein Förderfluid über die Außenseite 28 des Wärmetauschers 27 zur pumpenfernen Seite des Schwungradraumes 24. An der pumpenfernen Stirnseite des Schwungradraumes 24 ist im Bereich des Motordeckels 25 ein weiteres Niederdruckkühlsystem C-D angeordnet, mit dessen Hilfe ein entsprechendes Temperaturgefälle im Bereich der pumpenfernen Schwungrad-Stimseite 18 erreicht wird. Weiterhin ist erkennbar, dass der Motordeckel 25 über einen Anschluss für eine Hochdruckmotorkühlung E verfügt, welche mit dem Motorkühler 3 verbunden ist. Die Pfeile zeigen die Strömungsrichtung der Motorkühlflüssigkeit um die Wickelköpfe des Stators. Sie dienen gleichzeitig als Schmierflüssigkeit für das pumpennahe Motorlager 30. Die erwärmte Motorkühlflüssigkeit wird über Kanäle 31 im Motordeckel 25 entnommen und über den in Fig. 1 dargestellten Motorkühler 3 zurückgekühlt und am pumpenfernen Motordeckel 4 wieder in den Motor 1 eingespeist.

Ein in den Schwungradraum 24 an seinem pumpenfernen Ende eintretendes Förderfluid strömt durch einen Ringspalt 32 zwischen der Innenseite 33 des Wärmetauschers 27 und dem Außendurchmesser des Schwungrades 12 zum pumpennahen Schwungradraum 24.1. Dieser Ringspalt 32 bildet einen ersten Rückströmpfad für das Förderfluid, welches hier gleichzeitig der Wirkung des Wärmetauschers 27 ausgesetzt ist. Es fließt über den pumpennahen Schwungradraum 24.1 an der pumpennahen Stirnseite 34 des Schwungrades 12 in Richtung Wellenstrang 5. Vom Bereich des Wellenstranges 5 fließt es über den dort angeordneten zweiten Rückströmpfad zum Laufrad 8 der Pumpe 6 zurück. Dabei wird gleichzeitig ein Pumpenlager 35 geschmiert. Die Strömungsrichtung ist bedingt durch das Druckgefälle zwischen der Zone hohen Druckes im Pumpengehäuse 7 und der Zone niedrigeren Druckes im Bereich des Laufrades 8, welches durch die Axialschubentlastungsöffnungen 36 definiert ist.

Bei der Auslegung eines solchen Motor-Pumpen-Aggregates wird für die vorgegebenen Betriebsbedingungen die Größe und Anzahl der Strömungspfade festgelegt, um für die entsprechenden Leistungen eine Grundeinstellung für das kühlende Förderfluid zu erreichen. Ebenso ist es möglich, im Bereich des zweiten Strömungspfades eine zusätzliche Fördereinrichtung 37 vorzusehen, die vom Wellenstrang 5 angetrieben wird. In diesem Ausführungsbeispiel ist ein Fördergewinde dargestellt, es kann ebenso gut auch ein entsprechendes Laufrad oder eine andere bekannte unterstützende Fördereinrichtung 37 sein. Damit kann die Kühlleistung des im Schwungradraum 24, 24.1 zirkulierenden Förderfluides verbessert werden. Somit wird die vom Schwungrad 12 durch die hydrodynamische Reibung in der Flüssigkeit erzeugte Verlustwärme durch Stofftransport in äußerst effektiver Weise abgeführt.

Durch die gezielte Führung des internen Kühlstromes vom Pumpenraum zum Schwungradraum 24, 24.1 lässt sich das Temperaturniveau im Schwungradraum und auch innerhalb des Schwungrades 12 so beeinflussen, dass sich während eines Betriebes ein homogenes Temperaturniveau ausbildet. Unterstützt wird die Ausbildung des homogenen Temperaturniveaus im Schwungrad 12 durch die Wärmetauscherleistung am Außenumfang des Schwungrades 12. und die Kühlwirkung an der pumpenfernen Schwungradstirnseite 18. Eine Regelung dieser Wärmetauscherleistung ermöglicht die Einhaltung der Homogenität des Temperaturniveaus. Damit ergibt sich der entscheidende Vorteil, dass innerhalb des Schwungrades 12 durch Temperaturdifferenzen bedingte Materialspannungen vermieden werden.

Für denjenigen Betriebszustand, bei dem das Temperaturniveau im Schwungradraum höher ist als das Temperaturniveau des Förderfluids, kann mit dieser Lösung sogar Wärme in den Kreislauf der Pumpe zurückgeführt werden. Damit ist eine teilweise Rückgewinnung der Verlustwärme möglich. Auf jeden Fall ist jedoch die Temperatur im Schwungradraum 24, 24.1 auf ein Maximum begrenzt, welches die Festigkeit des Schwungradkörpers nicht negativ beeinflusst.

Fig. 4 zeigt eine Variante von Fig. 3, bei der lediglich die auf die Niederdruckkühlung CD im Bereich der pumpenfernen Stirnseite 8 des Schwungrades 12 verzichtet wurde. Statt dessen wird hier die Hochdruckmotorkühlung E gleichzeitig auch zur Beeinflussung des Temperaturniveaus im Schwungradraum 24 verwendet. In Abhängigkeit von den vorgegebenen Betriebsbedingungen eines solchen Motor-Pumpen-Aggregates wird auch mit dieser Lösung das notwendige homogene Temperaturniveau im Schwungrad 12 sichergestellt. Die vom pumpenseitigen Motordeckel 25 gebildete pumpenferne Wand 29 des Schwungradraumes 24 wird hier durch die Hochdruck-Motorkühlung E mit Hilfe einer Verbindung 39 beaufschlagt. Im Bereich der Wand 25 ist eine Wellenabdichtung 38 angeordnet, die eine Durchmischung der Fluide reduziert.

Im Diagramm der Fig. 5 ist ein erster Kurvenzug σ_{A} dargestellt, der eine bestimmende Festigkeitseigenschaft vom Material des Schwungradkörpers in Abhängigkeit von der Temperatur zeigt. Diese Festigkeitseigenschaft, beispielsweise 80 % der Streckgrenze, beinhaltet einen ausreichenden Sicherheitszuschlag gegenüber Materialversagen.

In einem zweiten Kurvenzug η_{ges} ist der Gesamtwirkungsgrad des Motor-Pumpen-Aggregates über der Temperatur aufgetragen. Die Temperatur entspricht derjenigen, die im Schwungradraum herrschen kann. Der Schnittpunkt A der beiden Kurvenzüge entspricht dem Betriebspunkt des Motor-Pumpen-Aggregates bei allen funktionierenden Kühlsystemen. An diesem Punkt A herrscht die optimale Betriebstemperatur T ₒₚₜ. Hierbei stellt sich im Schwungradraum und im Schwungrad ein homogenes Temperaturniveau T ₒₚₜ ein.

Dieser Betriebspunkt A weist zusätzlich einen weiteren hohen Sicherheitsabstand S gegenüber denjenigen Betriebszuständen auf, bei denen mit einem Ausfall eines externen Kühlsystem gerechnet wurde. Tritt ein solcher Zustand ein, bei dem ein oder mehrere externe Kühlsysteme ausfallen, was als ein Störfall zu bezeichnen ist, dann wird aufgrund der internen Flüssigkeitsreibung innerhalb des Schwungradraumes die Temperatur ansteigen bis zu einer sich maximal einstellenden Temperatur Z₀.

Ein solcher Temperaturanstieg hat zur Folge, dass sich die Viskosität des Förderfluids infolge der ansteigenden Temperatur verringert und somit die Verlustleistung im Schwungradraum abnimmt. Infolgedessen steigt der Gesamtwirkungsgrad η_{ges} des Motor-Pumpen-Aggregates an. Die negative Wirkung eines Temperaturanstieges ist jedoch eine Abnahme der Materialfestigkeit des Schwungradkörpers auf einen geringeren Wert σ_{L} bei der Temperatur T₀. Somit ergibt sich beim Ausfall einer externen Kühlung im Schwungradraum ein Störfall-Betriebspunkt B auf höherem Temperaturniveau T₀. In diesem Betriebspunkt B ist jedoch die Festigkeit des Schwungradkörpers immer noch gewährleistet, aufgrund der in diesem Beispiel verbleibenden 20 % Streckgrenzenreserve. Das im Diagramm rechts neben dem Störfall-Betriebspunkt B schraffiert dargestellte Feld C kennzeichnet einen unzulässigen Betriebsbereich.

Durch den bewussten Verzicht auf eine Verbesserung des Gesamtwirkungsgrades η_{ges} wird somit eine gravierende Verbesserung der Betriebssicherheit erreicht. Auch bei einem Ausfall einer externen Kühleinrichtung ist immer noch ein sicherer Betrieb des Motor-Pumpen-Aggregates gewährleistet. Selbst dann ist nicht zu befürchten, dass aufgrund unzulässiger Spannungszustände im Material des Schwungradkörpers ein Versagen des Schwungrades eintritt. Infolgedessen kann dadurch auf aufwendige Schutzeinrichtungen für das Schwungrad verzichtet werden, was zu einer gravierenden Kostenreduzierung und Erhöhung der Betriebssicherheit eines solchen Motor-Pumpen-Aggregates führt.

## Patentansprüche

1. Elektromotor (1) mit koaxial zugeordneter Pumpe (6) für einen Kühlmittelkreislauf, insbesondere in einer Anlage mit Temperaturüberführung und/oder Wärmeübertragung, wobei innerhalb von als hermetisch dichte Druckhülle ausgebildeten Gehäuseteilen (7, 10) ein Wellenstrang (5) ein Drehmoment vom Elektromotor (1) auf mindestens ein im Pumpengehäuse (7) angeordnetes Laufrad (8) überträgt und zwischen Elektromotor (1) und Pumpengehäuse (7) ein Schwungrad (12) angeordnet ist, alle rotierenden Teile innerhalb eines hermetisch dichten Motor-Pumpen-Aggregats angeordnet sind und das Motor-Pumpen-Aggregat mit Flüssigkeit gefüllt ist, **dadurch gekennzeichnet, dass** das Schwungrad (12) aus einem Schwungradkörper (13) mit einer Vielzahl von Hohlräume (14, 15) und mit in den Hohlräumen (14, 15) angeordneten Schwermetalleinsätzen (16, 17) besteht, dass ein Schwermetall mit einer Dichte größer 11,0 (kg/dm³) die Schwermetalleinsätze (16, 17) bildet oder darin angeordnet ist und dass der Schwungradkörper (13) aus einem hochfesten Material besteht.

2. Elektromotor nach Anspruch 1, **dadurch gekennzeichnet, dass** Mittel zur Abschirmung der Schwermetalleinsätze (16, 17) gegenüber einer umgebenden Flüssigkeit angeordnet sind.

3. Elektromotor nach Anspruch 1 oder 2, **dadurch gekennzeichnet, dass** die Schwermetalleinsätze (16, 17) kartuschenartig (21, 22) ausgebildet und mit an sich bekannten Mitteln im Schwungradkörper (13) befestigt sind.

4. Elektromotor nach Anspruch 1 oder 2, **dadurch gekennzeichnet, dass** die Schwermetalleinsätze (16, 17) als in die Hohlräume (14, 15) eingefüllte Schüttungen ausgebildet und mit an sich bekannten Mitteln im Schwungradkörper (13) gehalten sind.

5. Elektromotor nach einem der Ansprüche 1 bis 4, **dadurch gekennzeichnet, dass** der Schwundradkörper (13) keine Bohrung für eine Durchführung des Wellenstranges (5) aufweist.

6. Elektromotor nach einem der Ansprüche 1 bis 5, **dadurch gekennzeichnet, dass** der Schwungradkörper (13) mit ein - oder mehrteiligen Flanschverbindungen (19, 20) mit dem Wellenstrang (5) verbunden ist.

7. Elektromotor nach einem der Ansprüche 1 bis 6, **dadurch gekennzeichnet, dass** Stirnverzahnungen (20) die Verbindungsmittel zwischen Schwungradkörper (13) und Wellenstrang (5) bilden.

8. Elektromotor nach Anspruch 1, **dadurch gekennzeichnet, dass** innerhalb der Druckhülle mindestens ein den Außendurchmesser des Schwungrades(12) umgebender zylinderförmiger Wärmetauscher (27) angeordnet ist und eine radiale Wandfläche eines Schwungradraumes(24) bildet, dass eine Hochdruckzone des Pumpenraumes durch ein oder mehrere, über die Außenseite vom Wärmetauscher (27) geführte Strömungspfade (23) mit einer pumpenfernen Seite des Schwungradraumes (24) verbunden sind, dass ein Ringspalt (32) zwischen Wärmetauscher (27) und Schwungrad (12) einen ersten Rückstrompfad zwischen dem pumpenfernen und dem pumpennahen Schwungradraum (24.1) bildet und dass ein im Bereich des Wellenstrangs (5) angeordneter zweiter Rückstrompfad den pumpennahen Schwungradraum (24.1) mit dem Pumpenraum verbindet.

9. Elektromotor nach Anspruch 8, **dadurch gekennzeichnet, dass** mehrere zylinderförmige Wärmetauscher (27) das Schwungrad (12) koaxial umgeben und zwischen den Wärmetauschern (27) ein Ringspalt oder mehrere Kanäle den Strömungspfad zum pumpenfernen Schwungradraum (24) bilden.

10. Elektromotor nach Anspruch 8 oder 9, **dadurch gekennzeichnet, dass** im zweiten Rückströmpfad mindestens eine vom Wellenstrang (5) angetriebene Fördereinrichtung (37) angeordnet ist.

11. Elektromotor nach einem der Ansprüche 1 bis 10, **dadurch gekennzeichnet, dass,** der zylinderförmige Wärmetauscher (27) mit einer externen Kühlwasserquelle (AB) verbunden ist.

12. Elektromotor nach einem der Ansprüche 1 bis 11, **dadurch gekennzeichnet, dass** ein pumpenseitiger Motordeckel (25) die pumpenferne Wand (29) des Schwungradraumes (24) bildet und dass im Motordeckel (25) eine Kühleinrichtung (C-D, F) angeordnet ist.

13. Elektromotor nach Anspruch 12, **dadurch gekennzeichnet, dass** die Kühleinrichtung (C-D) als eine Niederdruck-Kühleinrichtung ausgebildet ist.

14. Elektromotor nach Anspruch 12, **dadurch gekennzeichnet, dass** die Kühleinrichtung (E) als eine Hochdruck-Kühleinrichtung ausgebildet ist.

15. Elektromotor nach einem der Ansprüche 11 bis 14, **dadurch gekennzeichnet, dass** die Kühleinrichtung als Teil einer Hochdruck-Motorkühlung ausgebildet ist.

16. Elektromotor nach einem der Ansprüche 1 bis 15, **dadurch gekennzeichnet, dass** zwischen Motorraum und Schwungrad im Bereich des Wellenstranges eine Wellendichtung angeordnet ist.

## Claims

1. Electric motor (1) having a coaxially arranged pump (6) for a coolant circuit, in particular in a system with temperature transfer and/or heat transfer,
wherein within housing parts (7, 10), which are configured as a hermetically sealed pressure enclosure, a shaft assembly (5) transmits a torque from the electric motor (1) to at least one impeller (8), which is arranged in the pump housing (7), and a flywheel (12) is arranged between the electric motor (1) and the pump housing (7), all the rotating parts are arranged within a hermetically sealed motor/pump assembly, and the motor/pump assembly is filled with fluid,
**characterized in that** the flywheel (12) comprises a flywheel body (13) having a multiplicity of cavities (14, 15) and having heavy-metal inserts (16, 17), which are arranged in the cavities (14, 15), **in that** a heavy metal having a density of greater than 11.0 (kg/dm3) forms the heavy-metal inserts (16, 17) or is arranged therein, and **in that** the flywheel body (13) is composed of a high-strength material.

2. Electric motor according to Claim 1, **characterized in that** means are arranged for shielding the heavy-metal inserts (16, 17) against a surrounding fluid.

3. Electric motor according to Claim 1 or 2,
**characterized in that** the heavy-metal inserts (16, 17) are designed in the form of a cartridge (21, 22) and fixed in the flywheel body (13) by means, which are known in themselves.

4. Electric motor according to Claim 1 or 2,
**characterized in that** the heavy-metal inserts (16, 17) are designed in the form of filler material placed in the cavities (14, 15) and are retained in the flywheel body (13) using means, which are known in themselves.

5. Electric motor according to one of Claims 1 to 4,
**characterized in that** the flywheel body (13) does not have a hole for feeding through the shaft assembly (5).

6. Electric motor according to one of Claims 1 to 5,
**characterized in that** the flywheel body (13) is joined to the shaft assembly (5) by means of single or multipart flange joints (19, 20).

7. Electric motor according to one of Claims 1 to 6,
**characterized in that** spur gears (20) form the joining means between flywheel body (13) and shaft assembly (5).

8. Electric motor according to Claim 1, **characterized in that** at least one cylindrical heat exchanger (27) surrounding the outside diameter of the flywheel (12) is arranged within the pressure enclosure and forms a radial wall surface of a flywheel chamber (24), **in that** a high-pressure zone of the pump chamber is connected by means of one or more flow paths (23) fed over the outside of the heat exchanger (27) to a side of the flywheel chamber (24) remote from the pump, **in that** a ring gap (32) between heat exchanger (27) and flywheel (12) forms a first return flow path between the flywheel chamber remote from the pump and the flywheel chamber (24.1) near the pump, and **in that** a second return flow path arranged in the area of the shaft assembly (5) connects the flywheel chamber (24.1) near the pump to the pump chamber.

9. Electric motor according to Claim 8, **characterized in that** several cylindrical heat exchangers (27) surround the flywheel (12) coaxially, and between the heat exchangers (27) a ring gap or several channels form the flow path to the flywheel chamber (24) remote from the pump.

10. Electric motor according to Claim 8 or 9,
**characterized in that** at least one pumping device (37) is arranged in the second return flow path, which pumping device is driven by the shaft assembly (5).

11. Electric motor according to one of Claims 1 to 10,
**characterized in that** the cylindrical heat exchanger (27) is connected to an external cooling water source (A-B).

12. Electric motor according to one of Claims 1 to 11,
**characterized in that** a motor cover (25) on the pump side forms the wall (29) of the flywheel chamber (24) remote from the pump, and **in that** a cooling device (C-D, F) is arranged in the motor cover (25).

13. Electric motor according to Claim 12,
**characterized in that** the cooling device (C-D) is designed as a low-pressure cooling device.

14. Electric motor according to Claim 12,
**characterized in that** the cooling device (E) is designed as a high-pressure cooling device.

15. Electric motor according to one of Claims 11 to 14, **characterized in that** the cooling Device is designed as part of a high-pressure motor cooling system.

16. Electric motor according to one of Claims 1 to 15,
**characterized in that** a shaft seal is arranged between motor chamber and flywheel in the area of the shaft assembly.

## Revendications

1. Moteur électrique (1) doté d'une pompe à montage coaxial (6) pour un circuit d'agent de refroidissement, en particulier dans une installation comportant un transfert de température et/ou un transfert de chaleur, dans lequel, à l'intérieur de parties de boîtier (7, 10) réalisées en forme d'enveloppe de pression hermétiquement close, une ligne d'arbre (5) transmet un couple de rotation du moteur électrique (1) à au moins une roue mobile (8) disposée dans le boîtier de pompe (7) et un volant (12) est disposé entre le moteur électrique (1) et le boîtier de pompe (7), toutes les parties tournantes sont disposées à l'intérieur d'un groupe moteur-pompe hermétiquement clos et le groupe moteur-pompe est rempli de liquide, **caractérisé en ce que** le volant (12) est composé d'un corps de volant (13) avec une pluralité de cavités (14, 15) et avec des éléments en métal lourd (16, 17) disposés dans les cavités (14, 15), **en ce qu'**un métal lourd avec une densité supérieure à 11,0 (kg/dm³) forme les éléments en métal lourd (16, 17) ou est disposé dans ceux-ci et **en ce que** le corps de volant (13) est constitué d'une matière à haute résistance.

2. Moteur électrique selon la revendication 1,
**caractérisé en ce que** des moyens sont disposés pour protéger les éléments en métal lourd (16, 17) par rapport à un liquide environnant.

3. Moteur électrique selon la revendication 1 ou 2, **caractérisé en ce que** les éléments en métal lourd (16, 17) sont réalisés en forme de cartouches (21, 22) et sont fixés dans le corps de volant (13) par des moyens connus en soi.

4. Moteur électrique selon la revendication 1 ou 2, **caractérisé en ce que** les éléments en métal lourd (16, 17) sont réalisés en forme de matière en vrac déversée dans les cavités (14, 15) et sont retenus dans le corps de volant (13) par des moyens connus en soi.

5. Moteur électrique selon l'une quelconque des revendications 1 à 4, **caractérisé en ce que** le corps de volant (13) ne présente pas d'alésage pour un passage de la ligne d'arbre (5).

6. Moteur électrique selon l'une quelconque des revendications 1 à 5, **caractérisé en ce que** le corps de volant (13) est assemblé à la ligne d'arbre (5) par des assemblages à bride (19, 20) en une ou plusieurs parties.

7. Moteur électrique selon l'une quelconque des revendications 1 à 6, **caractérisé en ce que** des dentures frontales (20) forment les moyens d'assemblage entre le corps de volant (13) et la ligne d'arbre (5).

8. Moteur électrique selon la revendication 1,
**caractérisé en ce qu'**au moins un échangeur de chaleur cylindrique (27) entourant le diamètre extérieur du volant (12) est disposé à l'intérieur de l'enveloppe de pression et forme une surface de paroi radiale d'une chambre de volant (24), **en ce qu'**une zone haute pression de la chambre de pompe est reliée à un côté de la chambre de volant (24) éloigné de la pompe au moyen d'un ou de plusieurs chemins d'écoulement (23) menés à partir de l'échangeur de chaleur (27) via le côté extérieur, **en ce qu'**une fente annulaire (32) entre l'échangeur de chaleur (27) et le volant (12) forme un premier chemin de reflux entre la chambre de volant éloignée de la pompe et la chambre de volant proche de la pompe (24.1) et **en ce qu'**un deuxième chemin de reflux disposé dans la région de la ligne d'arbre (5) relie la chambre de volant proche de la pompe (24.1) à la chambre de pompe.

9. Moteur électrique selon la revendication 8,
**caractérisé en ce que** plusieurs échangeurs de chaleur cylindriques (27) entourent coaxialement le volant (12) et une fente annulaire ou plusieurs canaux forment entre les échangeurs de chaleur (27) le chemin d'écoulement vers la chambre de volant (24) éloignée de la pompe.

10. Moteur électrique selon la revendication 8 ou 9, **caractérisé en ce qu'**au moins un dispositif de transport (37) entraîné par la ligne d'arbre (5) est disposé dans le deuxième chemin de reflux.

11. Moteur électrique selon l'une quelconque des revendications 1 à 10, **caractérisé en ce que** l'échangeur de chaleur cylindrique (27) est raccordé à une source extérieure d'eau de refroidissement (A-B).

12. Moteur électrique selon l'une quelconque des revendications 1 à 11, **caractérisé en ce qu'**un couvercle de moteur (25) côté pompe forme la paroi (29) de la chambre de volant (24) éloignée de la pompe et **en ce qu'**un dispositif de refroidissement (C-D, F) est disposé dans le couvercle de moteur (25).

13. Moteur électrique selon la revendication 12, **caractérisé en ce que** le dispositif de refroidissement (C-D) est un dispositif de refroidissement à basse pression.

14. Moteur électrique selon la revendication 12, **caractérisé en ce que** le dispositif de refroidissement (E) est un dispositif de refroidissement à haute pression.

15. Moteur électrique selon l'une quelconque des revendications 11 à 14, **caractérisé en ce que** le dispositif de refroidissement est une partie d'un refroidissement de moteur à haute pression.

16. Moteur électrique selon l'une quelconque des revendications 1 à 15, **caractérisé en ce qu'**un joint d'arbre est disposé dans la région de la ligne d'arbre entre la chambre de moteur et le volant.
